(19)

**Europäisches Patentamt**
**European Patent Office**
**Office européen des brevets**

(11)  **EP 4 633 257 A2**

(12)  **EUROPEAN PATENT APPLICATION**
published in accordance with Art. 153(4) EPC

(43) Date of publication:
**15.10.2025  Bulletin 2025/42**

(21) Application number: **24775201.7**

(22) Date of filing: **20.03.2024**

(51) International Patent Classification (IPC):
$H04W\ 56/00^{(2009.01)}$   $H04W\ 36/00^{(2009.01)}$
$H04W\ 36/34^{(2009.01)}$   $H04W\ 36/08^{(2009.01)}$
$H04W\ 84/06^{(2009.01)}$

(52) Cooperative Patent Classification (CPC):
**H04W 36/00; H04W 36/08; H04W 36/34;**
**H04W 56/00; H04W 84/06**

(86) International application number:
**PCT/KR2024/003509**

(87) International publication number:
**WO 2024/196155 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **23.03.2023  KR 20230038249**

(71) Applicants:
• **Hyundai Motor Company**
  **Seoul 06797 (KR)**
• **Kia Corporation**
  **Seoul 06797 (KR)**
• **INHA University Research and Business**
  **Foundation**
  **Incheon 22212 (KR)**

(72) Inventors:
• **SUH, Young Kil**
  **Hwaseong-si, Gyeonggi-do 18280 (KR)**
• **HAHN, Gene Back**
  **Hwaseong-si, Gyeonggi-do 18280 (KR)**
• **HONG, Ui Hyun**
  **Hwaseong-si, Gyeonggi-do 18280 (KR)**
• **LEE, Jeong Su**
  **Hwaseong-si, Gyeonggi-do 18280 (KR)**
• **KIM, Duk Kyung**
  **Seoul 06762 (KR)**

(74) Representative: **Isarpatent**
**Patent- und Rechtsanwälte**
**Barth Hassa Peckmann & Partner mbB**
**Friedrichstraße 31**
**80801 München (DE)**

(54)  **METHOD AND DEVICE FOR CONFIGURING TIMING GROUP FOR HANDOVER IN NON-TERRESTRIAL NETWORK**

(57)  Disclosed are a method and device for configuring a timing group for handover in a non-terrestrial network. The method performed by a user equipment (UE) may comprise the steps of: receiving timing group configuration information for a timing group including the UE from a first satellite on the basis of a beam spot supported by the first satellite; receiving a handover command message including timing information about the UE from the first satellite according to a timing group index included in the timing group configuration information; acquiring timing advance (TA) information using the timing information; and transmitting a handover completed message using the TA information.

EP 4 633 257 A2

【FIG. 15】

**Description**

[Technical Field]

The present disclosure relates to a technical of configuring a group for handover in a non-terrestrial network, and more particularly, to a technique of configuring a timing group for a random access channel (RACH)-less handover.

[Background Art]

When a handover procedure is performed in a terrestrial network or a non-terrestrial network, a Timing Advance (TA) of a source cell and a TA of a target cell may be different. In this case, when performing the handover procedure, if a terminal does not know the TA of the target cell, the terminal may acquire the TA of the target cell through a random access procedure. The process in which the terminal acquires the TA of the target cell through the random access procedure may cause a delay in the handover procedure. In order to reduce the delay in the handover procedure, a Random Access Channel (RACH)-less handover may be proposed in the terrestrial network. In this case, a target base station may transmit information on a timing difference of the TA of the target cell to the terminal. In addition, a source base station may transmit information on a timing difference of the TA of the source cell to the terminal.

In a terrestrial network environment, a handover procedure may occur due to movement of a terminal. Therefore, in the terrestrial network environment, a timing control method using individual signaling for the terminal by the base station may be appropriate.

In a non-terrestrial network environment, a handover procedure may mainly occur due to movement of a satellite. In addition, in the non-terrestrial network environment, handover procedures may occur at the same time or at similar times in a large number of terminals. A large number of random access procedures may be performed due to a large number of handover procedures. Signaling overhead may occur due to the large number of random access procedures. In the non-terrestrial network environment, RACH-less handover procedures may reduce signaling load and signaling delay caused by the large number of random access procedures. However, in the non-terrestrial network environment, when timing control signaling is performed on a terminal-by-terminal basis, signaling overhead may occur. In the non-terrestrial network, a large number of terminals may request handovers to the base station at the same time or at similar times. Therefore, the present disclosure proposes a method of configuring a group of terminals having similar timing information required for the RACH-less handover procedure.

Since signaling is performed on a group basis for the group having similar timing information, signaling overhead may be reduced. Therefore, the present disclosure proposes methods of configuring a group having similar timing in situations such as a feeder link switch, an earth fixed beam (EFB) environment, or an earth moving beam (EMB) environment.

[Disclosure]

[Technical Problem]

The present disclosure is directed to providing a method and an apparatus for configuring a timing group for a handover in a non-terrestrial network.

[Technical Solution]

A method of a user equipment (UE), according to a first exemplary embodiment of the present disclosure, may comprise: receiving, from a first satellite, timing group configuration information for a timing group including the UE, the timing group being configured based on a beam spot supported by the first satellite; receiving, from the first satellite, a handover command message including timing information of the UE according to a timing group index included in the timing group configuration information; acquiring timing advance (TA) information using the timing information; and transmitting a handover complete message using the TA information.

The timing group configuration information may include the timing group index for identifying the timing group including UEs within a first TA range configured by the base station, when a difference between a timing value of the UE and a timing value for a center position of a configured distance defined by a base station associated with the first satellite falls within the first TA range.

The timing group configuration information may include the timing group index for identifying the timing group including UEs within a distance range configured by the base station from a center position of the beam spot, when the UE is within the distance range from the center position of the beam spot.

The timing group configuration information may include the timing group index for identifying the timing group including UEs having a cell remaining time within a time range configured by the first satellite, when a cell remaining time, which is a time during which communication services for the beam spot are provided to the UE, falls within the time range.

In the acquiring of the TA information using the timing information, the TA information may be acquired by using a timing difference value corresponding to a difference between a first path including a path between the first satellite and a center position of the timing group and a path between the first satellite and a base station and a second path including a path between a second satellite and the center position of the timing group and a path between the second satellite and a base station.

The acquiring of the TA information using the timing information may comprise: determining a UE-specific TA value; and acquiring the TA information by updating the TA information for the UE using the UE-specific TA value and at least one of a common TA value that is applied equally to all UEs of a source cell, a common TA value that is applied equally to all UEs of a target cell, or a timing difference value caused by a difference in reference point (RP) between the source cell and the target cell, which is included in the timing information.

The acquiring of the TA information using the timing information may comprise: receiving, from the first satellite, at least one of position information of the UE, position information of the first satellite, or satellite ephemeris information; calculating a timing adjustment value for the UE using at least one of the position information of the UE, the position information of the first satellite, and the satellite ephemeris information; and acquiring the TA information using the timing adjustment value and the timing information.

A method of a base station, according to a second exemplary embodiment of the present disclosure, may comprise: configuring timing group configuration information for a timing group including a user equipment (UE) based on a beam spot supported by a first satellite; transmitting, to the UE, a handover command message including timing information for the timing group to which the UE belongs, according to a timing group index included in the timing group configuration information; and receiving a handover complete message from the UE that performed a handover procedure based on the timing information for the timing group to which the UE belongs.

The configuring of the timing group configuration information may comprise: in response to a difference between a timing value of the UE and a timing value for a center position of a configured distance defined by the base station communicating through the first satellite being equal to or less than a second TA value defined by the base station for the timing group, configuring the UE into the timing group.

The configuring of the timing group configuration information may comprise: in response to a cell remaining time, which is a time during which communication services for the beam spot are provided to the UE, falling within a time range configured by the first satellite, configuring the UE into the timing group.

The timing information may include at least one of a common TA value that is applied equally to all UEs of a source cell, a common TA value that is applied equally to all UEs of a target cell, or a timing difference value caused by a difference in reference point (RP) between the source cell and the target cell.

A user equipment (UE), according to a second exemplary embodiment of the present disclosure, may comprise: at least one processor, wherein the at least one processor may cause the UE to perform: receiving, from a first satellite, timing group configuration information for a timing group including the UE, the timing group being configured based on a beam spot supported by the first satellite; receiving, from the first satellite, a handover command message including timing information of the UE according to a timing group index included in the timing group configuration information; acquiring timing advance (TA) information using the timing information; and transmitting a handover complete message using the TA information.

The timing group configuration information may include the timing group index for identifying the timing group including UEs within a first TA range configured by the base station, when a difference between a timing value of the UE and a timing value for a center position of a configured distance defined by a base station associated with the first satellite falls within the first TA range.

The timing group configuration information may include the timing group index for identifying the timing group including UEs within a distance range configured by the base station from a center position of the beam spot, when the UE is within the distance range from the center position of the beam spot.

The timing group configuration information may include the timing group index for identifying the timing group including UEs having a cell remaining time within a time range configured by the first satellite, when a cell remaining time, which is a time during which communication services for the beam spot are provided to the UE, falls within the time range.

In the acquiring of the TA information using the timing information, the TA information may be acquired by using a timing difference value corresponding to a difference between a first path including a path between the first satellite and a center position of the timing group and a path between the first satellite and a base station and a second path including a path between a second satellite and the center position of the timing group and a path between the second satellite and a base station.

In the acquiring of the TA information using the timing information, the at least one processor may further cause the UE to perform: determining a UE-specific TA value; and acquiring the TA information by updating the TA information for the UE using the UE-specific TA value and at least one of a common TA value that is applied equally to all UEs of a source cell, a common TA value that is applied equally to all UEs of a target cell, or a timing difference value caused by a difference in reference point (RP) between the source cell and the target cell, which is included in the timing information.

In the acquiring of the TA information using the timing information, the at least one processor may further cause the UE to perform: receiving, from the first satellite, at least one of position information of the UE, position information of the first satellite, or satellite ephemeris information; calculating a timing adjustment value for the UE using at least one of the position information of the UE, the position information of the first satellite, and the satellite ephemeris information; and acquiring the TA information using the timing adjustment value and the timing information.

[Advantageous Effects]

According to the present disclosure, in order to enable coexistence between a non-terrestrial communication network (NTN) and a terrestrial communication network (TN), the NTN and the TN can use the same frequency. The NTN and the TN can provide services in the same area by using the same frequency. In the NTN, since signaling for handover procedures is performed on a group basis for terminals having similar timing information, signaling overhead can be reduced.

[Description of Drawings]

FIG. 1A is a conceptual diagram illustrating exemplary embodiments of a non-terrestrial network.
FIG. 1B is a conceptual diagram illustrating exemplary embodiments of a non-terrestrial network.
FIG. 2A is a conceptual diagram illustrating exemplary embodiments of a non-terrestrial network.
FIG. 2B is a conceptual diagram illustrating exemplary embodiments of a non-terrestrial network.
FIG. 2C is a conceptual diagram illustrating exemplary embodiments of a non-terrestrial network.
FIG. 3 is a block diagram illustrating exemplary embodiments of a communication node constituting a non-terrestrial network.
FIG. 4 is a block diagram illustrating exemplary embodiments of communication nodes performing communication.
FIG. 5A is a block diagram illustrating exemplary embodiments of a transmission path.
FIG. 5B is a block diagram illustrating exemplary embodiments of a reception path.
FIG. 6A is a conceptual diagram illustrating exemplary embodiments of a protocol stack of a user plane in a transparent payload-based non-terrestrial network.
FIG. 6B is a conceptual diagram illustrating exemplary embodiments of a protocol stack of a control plane in a transparent payload-based non-terrestrial network.
FIG. 7A is a conceptual diagram illustrating exemplary embodiments of a protocol stack of a user plane in a regenerative payload-based non-terrestrial network.
FIG. 7B is a conceptual diagram illustrating exemplary embodiments of a protocol stack of a control plane in a regenerative payload-based non-terrestrial network.
FIG. 8 is a conceptual diagram illustrating exemplary embodiments of a non-terrestrial network.
FIG. 9 is a conceptual diagram illustrating exemplary embodiments of an uplink time synchronization procedure.
FIG. 10A is a conceptual diagram illustrating exemplary embodiments of a handover procedure.
FIG. 10B is a conceptual diagram illustrating exemplary embodiments of a handover procedure.
FIG. 11 is a conceptual diagram illustrating exemplary embodiments of beam footprints in an EFB environment.
FIG. 12 is a conceptual diagram illustrating exemplary embodiments of EMBs.
FIG. 13A is a conceptual diagram illustrating exemplary embodiments of a handover in a non-terrestrial network.
FIG. 13B is a conceptual diagram illustrating exemplary embodiments of a handover in a non-terrestrial network.
FIG. 14A is a conceptual diagram illustrating exemplary embodiments of a feeder link switch environment.
FIG. 14B is a conceptual diagram illustrating exemplary embodiments of a feeder link switch environment.
FIG. 15 is a conceptual diagram illustrating exemplary embodiments of timing group configuration.
FIG. 16 is a conceptual diagram illustrating exemplary embodiments of a handover procedure in an EMB environment.
FIG. 17 is a conceptual diagram illustrating exemplary embodiments of a handover procedure in an EMB environment.
FIG. 18 is a conceptual diagram illustrating exemplary embodiments of a handover procedure in an EMB environment.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

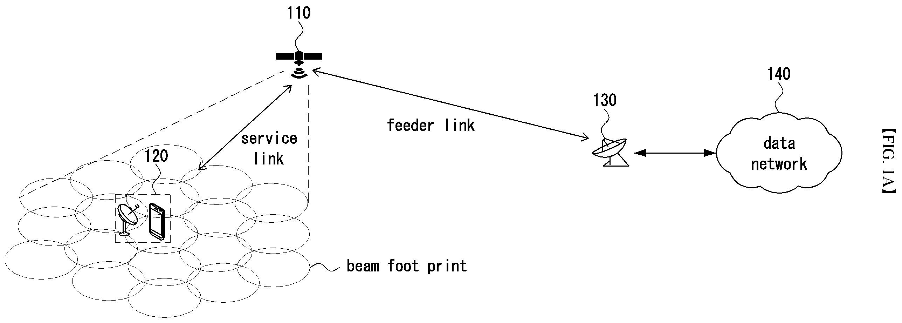

FIG. 1A is a conceptual diagram illustrating exemplary embodiments of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may provide communication services to the communication node 120 using one or more beams. The shape of a footprint of the beam of the satellite 110 may be elliptical or circular.

In the non-terrestrial network, three types of service links can be supported as follows.

- earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. For example, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

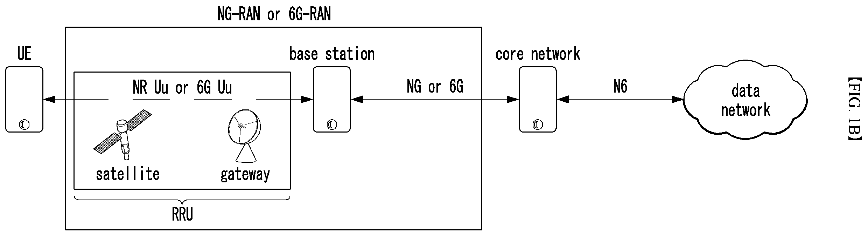

As shown in an exemplary embodiment of FIG. 1B, there may be a 'core network' between the gateway 130 and the data network 140 in a transparent payload-based NTN.

FIG. 1B is a conceptual diagram illustrating exemplary embodiments of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

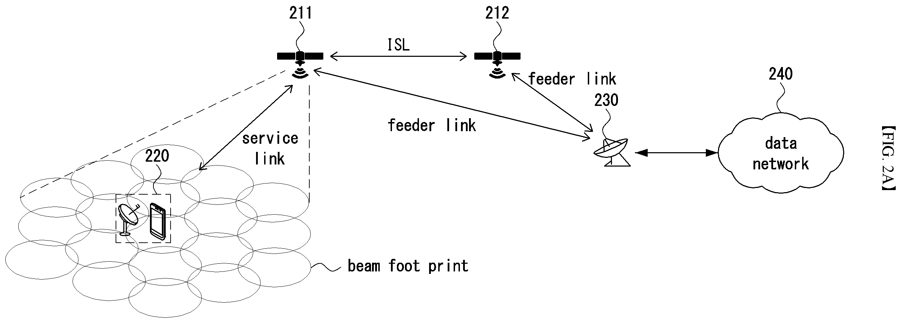

FIG. 2A is a conceptual diagram illustrating exemplary embodiments of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, remodulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

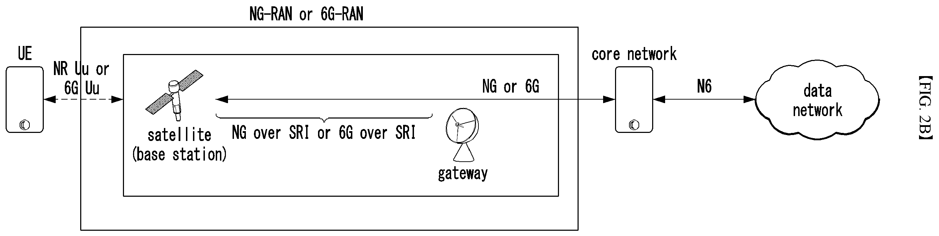

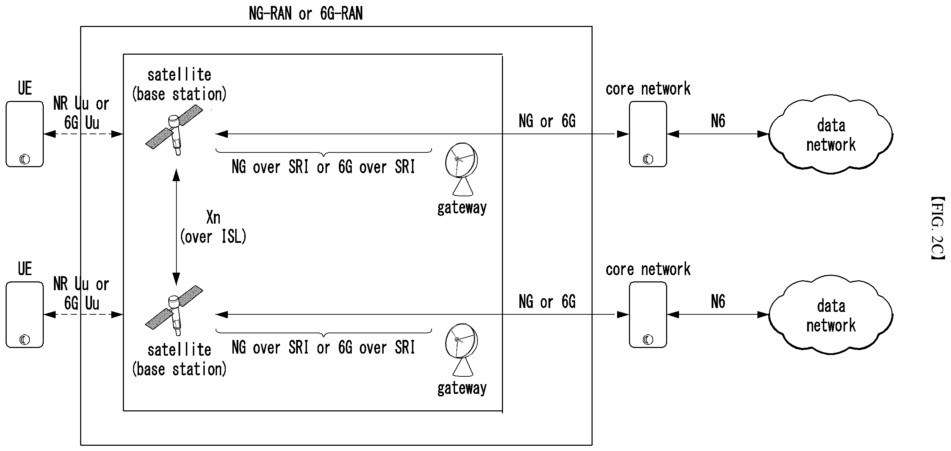

As shown in exemplary embodiments of FIG. 2B and FIG. 2C, there may be a 'core network' between the gateway 230 and the data network 240.

FIG. 2B is a conceptual diagram illustrating exemplary embodiments of a non-terrestrial network, and FIG. 2C is a conceptual diagram illustrating exemplary embodiments of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

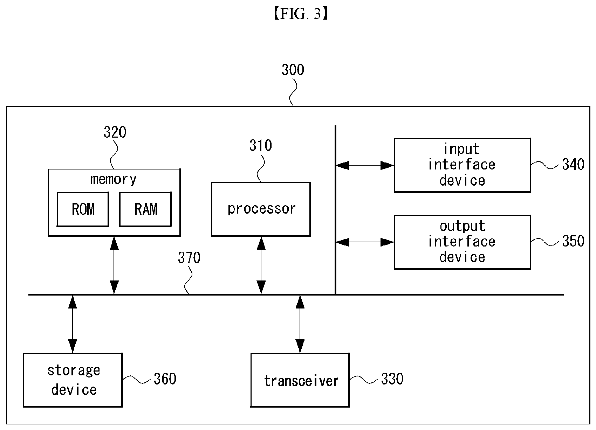

FIG. 3 is a block diagram illustrating exemplary embodiments of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage

8

device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

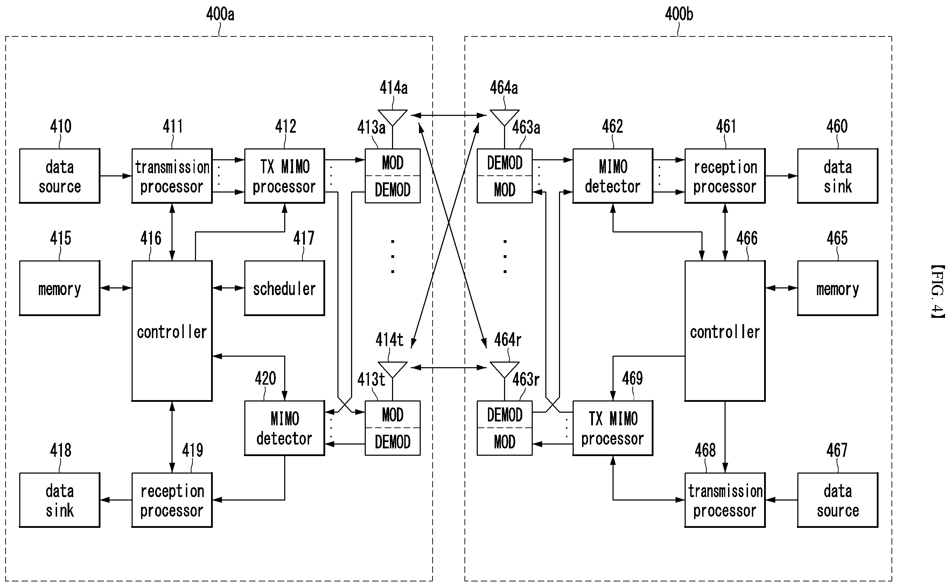

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating exemplary embodiments of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

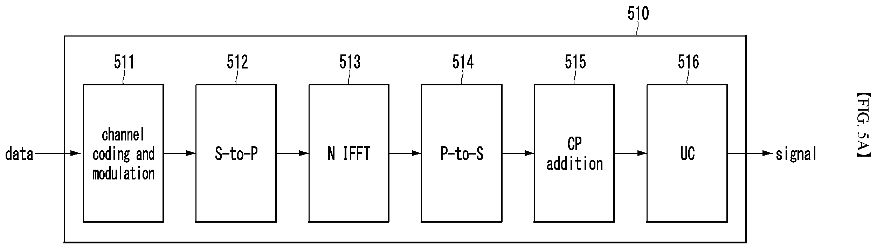

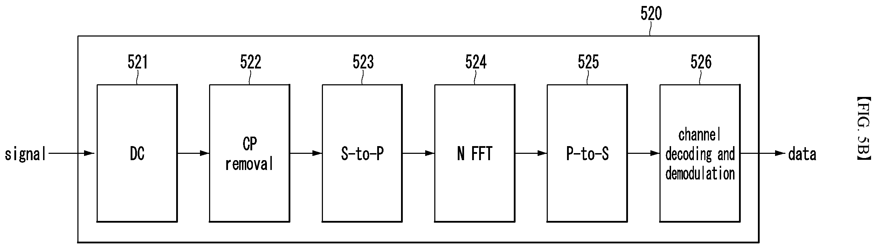

FIG. 5A is a block diagram illustrating exemplary embodiments of a transmission path, and FIG. 5B is a block diagram illustrating exemplary embodiments of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

| [111] | [112] NTN shown in FIG. 1 | [113] NTN shown in FIG. 2 |
|---|---|---|
| [114] GEO | [115] Scenario A | [116] Scenario B |
| [117] LEO (steerable beams) | [118] Scenario C1 | [119] Scenario D1 |
| [120] LEO (beams moving with satellite) | [121] Scenario C2 | [122] Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'.

When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'.

When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

| | Scenarios A and B | Scenarios C and D |
|---|---|---|
| Altitude | 35,786 km | 600 km<br>1,200 km |
| Spectrum (service link) | < 6 GHz (e.g. 2 GHz)<br>> 6 GHz (e.g. DL 20 GHz, UL 30 GHz) | |
| Maximum channel bandwidth capability (service link) | 30 MHz for band <6 GHz<br>1 GHz for band >6 GHz | |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms (service and feeder links)<br>Scenario B: 270.73 ms (only service link) | Scenario C: (transparent payload: service and feeder links)<br>-5.77 ms (altitude of 60 0km)<br>-41.77 ms (altitude of 1,200 km)<br>Scenario D: (regenerative payload: only service link)<br>-12.89 ms (altitude of 600 km)<br>-20.89 ms (altitude of 1,200 km) |
| Maximum differential delay within a cell | 10.3 ms | 3.12 ms (altitude of 600 km)<br>3.18 ms (altitude of 1,200 km) |
| Service link | NR defined in 3GPP | |
| Feeder link | Radio interfaces defined in 3GPP or non-3GPP | |

In addition, in the scenarios defined in Table 1, delay constraints may be defined as shown in Table 3 below.

[Table 3]

| | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

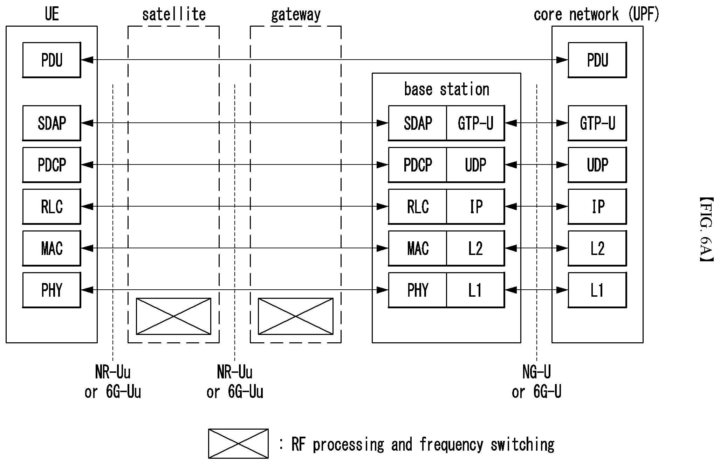

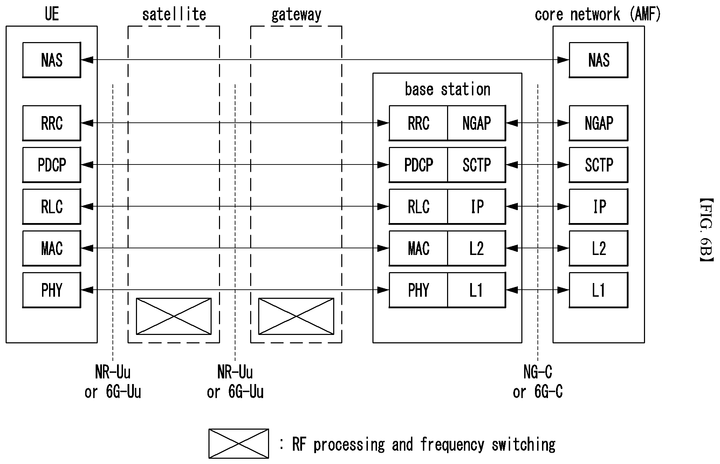

FIG. 6A is a conceptual diagram illustrating exemplary embodiments of a protocol stack of a user plane in a transparent payload-based non-terrestrial network, and FIG. 6B is a conceptual diagram illustrating exemplary embodiments of a protocol stack of a control plane in a transparent payload-based non-terrestrial network.

As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

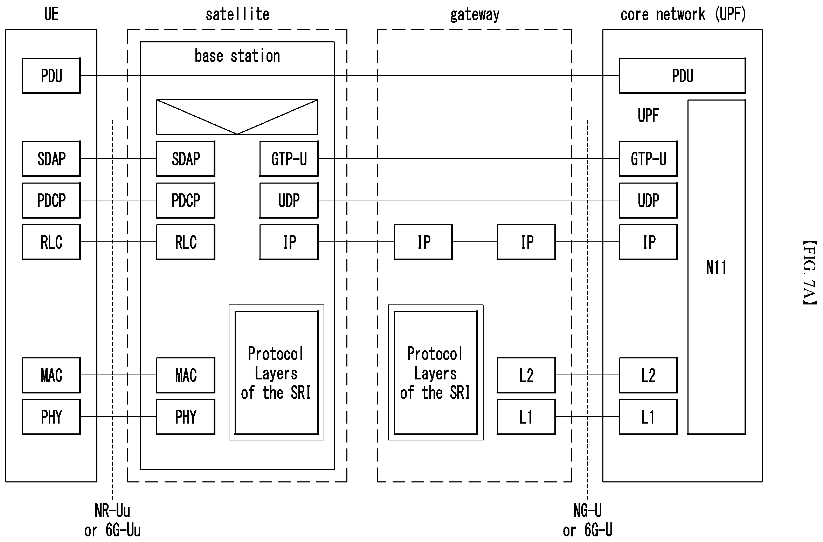

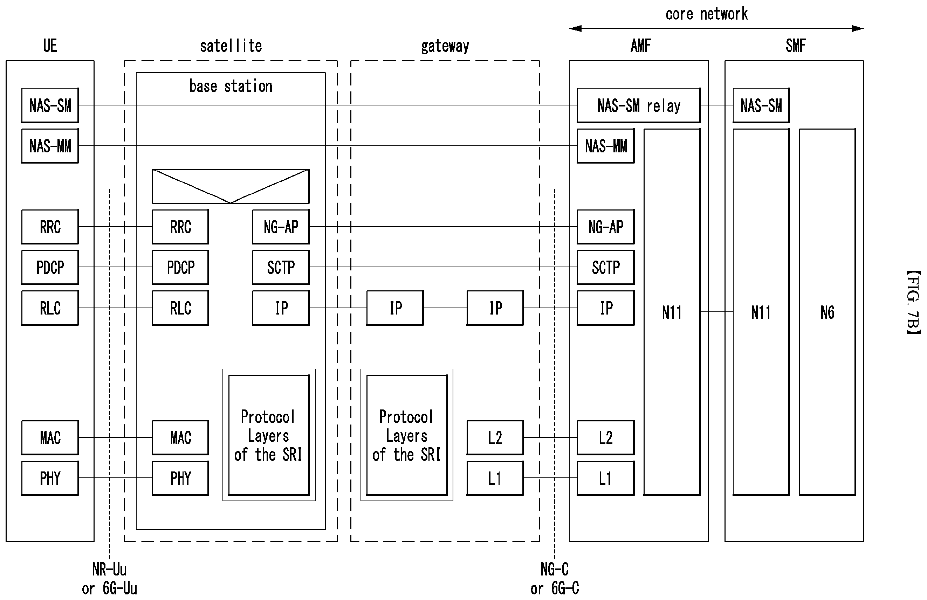

FIG. 7A is a conceptual diagram illustrating exemplary embodiments of a protocol stack of a user plane in a regenerative payload-based non-terrestrial network, and FIG. 7B is a conceptual diagram illustrating exemplary embodiments of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB19) including satellite assistance information for NTN access. A UE may receive the system information (e.g. SIB19) from the base station, identify the satellite assistance information included in the system information, and perform communication (e.g. non-terrestrial communication) based on the satellite assistance information. The SIB19 may include information element(s) defined in Table 4 below.

[Table 4]

```
SIB19-r17 ::= SEQUENCE {
    ntn-Config-r17                      NTN-Config-r17
    t-Service-r17                       INTEGER(0..549755813887)
    referenceLocation-r17               ReferenceLocation-r17
    distanceThresh-r17                  INTEGER(0..65525)
    ntn-NeighCellConfigList-r17         NTN-NeighCellConfigList-r17
    lateNonCriticalExtension            OCTET STRING

    ...,
    [[
    ntn-NeighCellConfigListExt-v1720    NTN-NeighCellConfigList-r17
    ]]
}
NTN-NeighCellConfigList-r17 ::=         SEQUENCE (SIZE(1..maxCellNTN-r17))
OF NTN-NeighCellConfig-r17
    NTN-NeighCellConfig-r17 ::=             SEQUENCE {
    ntn-Config-r17                          NTN-Config-r17
    carrierFreq-r17                         ARFCN-ValueNR
    physCellId-r17                          PhysCellId
}
```

*NTN-Config* defined in Table 4 may include information element(s) defined in Table 5 below.

[Table 5]

```
NTN-Config-r17 ::=                  SEQUENCE {
    epochTime-r17                       EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17             INTEGER(1..1023)
    kmac-r17                            INTEGER(1..512)
    ta-Info-r17                         TA-Info-r17
    ntn-PolarizationDL-r17              ENUMERATED {rhcp,lhcp,linear}
    ntn-PolarizationUL-r17              ENUMERATED {rhcp,lhcp,linear}
    ephemerisInfo-r17                   EphemerisInfo-r17
    ta-Report-r17                       ENUMERATED {enabled}
    ...
}
EpochTime-r17 ::=                   SEQUENCE {
    sfn-r17                             INTEGER(0..1023),
    subFrameNR-r17                      INTEGER(0..9)
}
TA-Info-r17 ::=                     SEQUENCE   {
    ta-Common-r17                       INTEGER(0..66485757),
    ta-CommonDrift-r17                  INTEGER(-257303..257303)
    ta-CommonDriftVariant-r17       INTEGER(0..28949)
}
```

*EphemerisInfo* defined in Table 5 may include information element(s) defined in Table 6 below.

[Table 6]

```
EphemerisInfo-r17 ::=              CHOICE {
        positionVelocity-r17              PositionVelocity-r17,
        orbital-r17                       Orbital-r17
}
PositionVelocity-r17 ::=          SEQUENCE {
        positionX-r17                     PositionStateVector-r17,
        positionY-r17                     PositionStateVector-r17,
        positionZ-r17                     PositionStateVector-r17,
        velocityVX-r17                    VelocityStateVector-r17,
        velocityVY-r17                    VelocityStateVector-r17,
        velocityVZ-r17                    VelocityStateVector-r17
}
Orbital-r17 ::=                   SEQUENCE {
        semiMajorAxis-r17                 INTEGER (0..8589934591),
        eccentricity-r17                  INTEGER (0..1048575),
        periapsis-r17                     INTEGER (0..268435455),
        longitude-r17                     INTEGER (0..268435455),
        inclination-r17                   INTEGER (-67108864..67108863),
        meanAnomaly-r17                   INTEGER (0..268435455)
}
PositionStateVector-r17 ::= INTEGER (-33554432..33554431)
VelocityStateVector-r17 ::= INTEGER (-131072..131071)
```

In a handover procedure in a terrestrial network environment or a non-terrestrial network environment, a source cell timing advance (TA) and a target cell TA may be different. When a terminal is not aware of a TA value of the target cell in the handover procedure, the terminal may acquire the TA value of the target cell through a random access procedure. Accordingly, the terminal may perform a system information acquisition procedure, an initial timing estimation procedure, and a fine tuning procedure through preamble transmission, identically to an initial cell access procedure in an idle state (RRC_IDLE). When the terminal performs the fine tuning procedure, the handover of the terminal may be delayed. To reduce a delay of the handover, the terminal may perform a random access channel (RACH)-less handover procedure in a terrestrial network. In the RACH-less handover procedure, terminals may individually receive information on a timing difference between a TA of a target cell and a TA of a source cell. In the terrestrial network environment, a handover may occur due to movement of a terminal. Therefore, a timing control method in the terrestrial network may be performed through individual signaling for each terminal.

In the non-terrestrial network environment, a handover may mainly occur due to movement of a satellite. Therefore, in the non-terrestrial network environment, handovers may occur at the same time or at similar times for a large number of terminals. For example, to reduce a signaling load and/or signaling delay occurring in the non-terrestrial network environment, a RACH-less handover may be proposed. A TA value of a source cell and a TA value of a target cell may be different. Accordingly, for the RACH-less handover procedure, a source base station may transmit timing information of the target cell to terminals within the source cell. For example, the source base station may transmit the timing information of the target cell to the terminals within the source cell before the terminals initiate handover procedures. In the terrestrial network environment, a handover may individually occur for each terminal. In the terrestrial network environment, timings of handovers may be distributed. In contrast, in the non-terrestrial network environment, handover procedures may occur for a large number of terminals. In this case, the large number of terminals may request handover procedures to the same target satellite. Therefore, in the non-terrestrial network environment, the handover procedures may occur at the same time or at similar times. For example, in an earth fixed beam (EFB) environment, terminals included in the same beam spot may request handover procedures to the same target satellite at the same time or at similar times. In an earth moving beam (EMB) environment, terminals included in a beam spot of a satellite may continuously request handover procedures to a target satellite according to movement of the satellite. Accordingly, in the EMB environment, handover procedures may occur in a distributed manner at various times. In addition, in the EMB environment, handover procedures may occur due to the satellite moving according to a relatively predetermined pattern, unlike handovers occurring due to individual movements of terminals in the TN environment.

In the non-terrestrial network environment, signaling caused by individual handovers of terminals may generate a high signaling load. Therefore, to efficiently process a RACH-less handover in the non-terrestrial network environment, the satellite may transmit timing information through group-based signaling. The group-based signaling may reduce signaling overhead during handovers.

To use the group-based signaling, the satellite may configure groups of terminals having similar timing. A group having similar timing information may be signaled on a group basis, thereby reducing signaling overhead. Therefore, the present disclosure proposes methods of configuring groups having similar timing in situations such as a feeder link switch, an EFB environment, or an EMB environment.

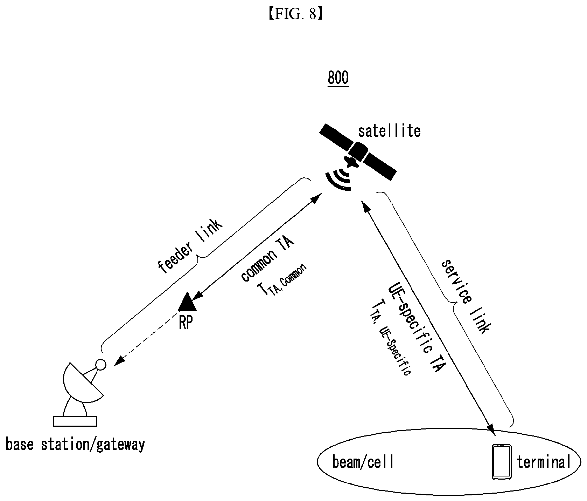

FIG. 8 is a conceptual diagram illustrating exemplary embodiments of a non-terrestrial network.

As shown in FIG. 8, a satellite may perform a method for improving uplink time synchronization and uplink frequency synchronization for an NR non-terrestrial network (NTN). A terminal may perform a method for controlling timing in a radio resource control (RRC) idle state (RRC_IDLE) or an RRC inactive state (RRC_INACTIVE). The terminal may acquire initial timing information by using system information provided by the satellite for common TA calculation, and by using a global navigation satellite system (GNSS) function. The terminal may acquire an initial TA before transmitting a physical random access channel (PRACH) preamble to the satellite. For uplink timing synchronization of the terminal, a timing error may need to be within half of the preamble cyclic prefix (CP). The timing error may refer to a timing error after pre-compensating for a delay before initial RACH preamble transmission.

The present disclosure proposes an open-loop TA including a common TA and a UE-specific TA in the NR NTN. The common TA may change over time. The network may calculate the common TA. In addition, the network may deliver the common TA value to the terminal. The terminal may estimate and predict the common TA over time according to a defined rule by using common TA parameters delivered from the network. The UE-specific TA may refer to a TA estimated by the terminal to pre-compensate for a service link delay. The position of the satellite and the position of the terminal may be transmitted to the terminal to enable estimation of the TA.

The NR NTN may have differences from a 5G NR in the presence or absence of an open-loop TA and related parameters, that is, the common TA parameters and satellite ephemeris information. To enable access of terminals to the network in the RRC idle state (RRC_IDLE) or RRC inactive state (RRC_INACTIVE), the open-loop TA parameters may be included in a system information block (SIB) message. The open-loop TA parameters may include information on a periodicity of a synchronization signal (SS)/physical broadcast channel (PBCH) block (i.e. SSB), which may be, for example, greater than 20 ms. A validity duration of the common TA parameters and satellite ephemeris information may be configured by the base station. In the NR NTN, the terminal may perform a procedure for uplink time synchronization. The procedure for uplink time synchronization is described as follows.

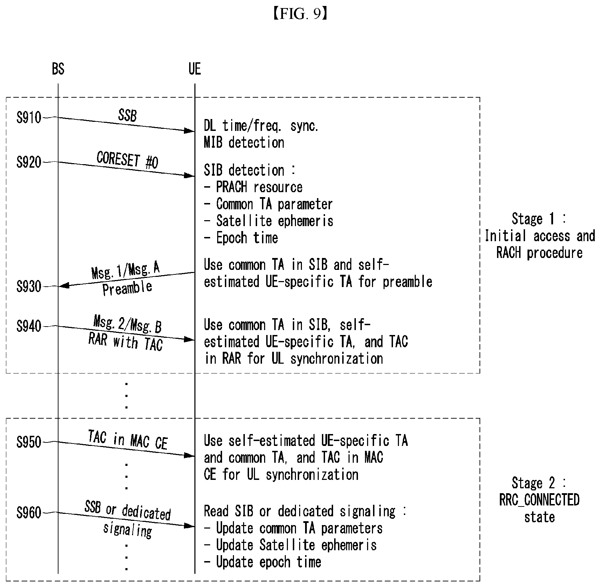

FIG. 9 is a conceptual diagram illustrating exemplary embodiments of an uplink time synchronization procedure.

As shown in FIG. 9, the base station may transmit an SSB to the terminal (S910). The SSB may include at least one of DL time information, DL frequency information, and synchronization information. The terminal may receive the SSB transmitted by the base station.

The base station may transmit data to the terminal by using a control resource set (CORESET) #0 (S920). The CORESET#0 may refer to physical resources used for carrying PDCCH/DCI. In other words, the CORESET#0 may refer to a specific type of CORESET used for carrying PDCCH/DCI for SIB. A detected SIB may include at least one of PRACH resources, common TA parameters, satellite ephemeris information, and absolute time information. The terminal may receive physical resources from the base station through the CORESET#0.

The terminal may use a common TA included in the SIB. The terminal may estimate a UE-specific TA. The terminal may use the estimated UE-specific TA for preamble transmission.

The terminal may transmit a message 1 (Msg1) or message A (MsgA) to the base station (S930). The message 1 (Msg1) or message A (MsgA) may include a preamble. The base station may receive the message 1 (Msg1) or message A (MsgA) transmitted by the terminal.

The base station may transmit a message 2 (Msg2) or message B (MsgB) to the terminal (S940). The message 2 (Msg2) or message B (MsgB) may include a random access response (RAR) message. The RAR may include a timing advance command (TAC) field. The terminal may receive the message 2 (Msg2) or message B (MsgB) transmitted by the base station.

For uplink synchronization, the terminal may use at least one of the common TA included in the SIB, the UE-specific TA, or the TAC included in the RAR.

In an RRC connected state, the terminal and the base station may perform the following procedure. The base station may transmit a MAC CE including a TAC to the terminal (S950). The terminal may receive the TAC transmitted by the base station. The terminal may perform an uplink synchronization procedure by using at least one of the TAC of the received MAC CE, the common TA, or the UE-specific TA.

The base station may transmit an SSB or dedicated signaling to the terminal (S960). The terminal may receive the SSB or dedicated signaling transmitted by the base station. The terminal may update the common TA parameters by using the SSB or dedicated signaling. The terminal may update the satellite ephemeris information by using the SSB or dedicated signaling. The terminal may update the absolute time by using the SSB or dedicated signaling.

Meanwhile, when performing a RACH-less handover in the NTN, the base station may use a reference signal (RS) resource using the same beam (e.g. the same beam index) as an SS/PBCH block to schedule an initial PUSCH transmission. The RS resource associated with the SS/PBCH block index may have a quasi-co-location (QCL) relationship with the SS/PBCH block, which may be used for PDCCH reception.

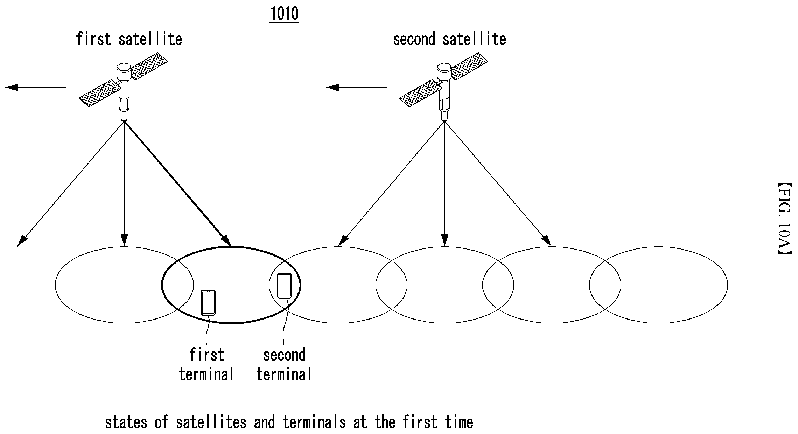

FIG. 10A is a conceptual diagram illustrating exemplary embodiments of a handover procedure.

As shown in FIG. 10A, in the EFB environment, satellites (i.e. a first satellite and a second satellite) may form cell coverages. In this case, a beam coverage may be formed by at least one or more beam regions (e.g. beam spots). A beam region may refer to a region covered by one beam. In other words, the satellite may form one or more beam regions (beam spots).

In the EFB environment, all terminals in the same beam spot may transmit requests for handover procedures to the satellite at the same time or at similar times. When terminals are included in the same beam spot, the terminals may have the same value of cell remaining time. Based on the same value of the cell remaining time, the satellite may configure all terminals in the same beam spot into the same group.

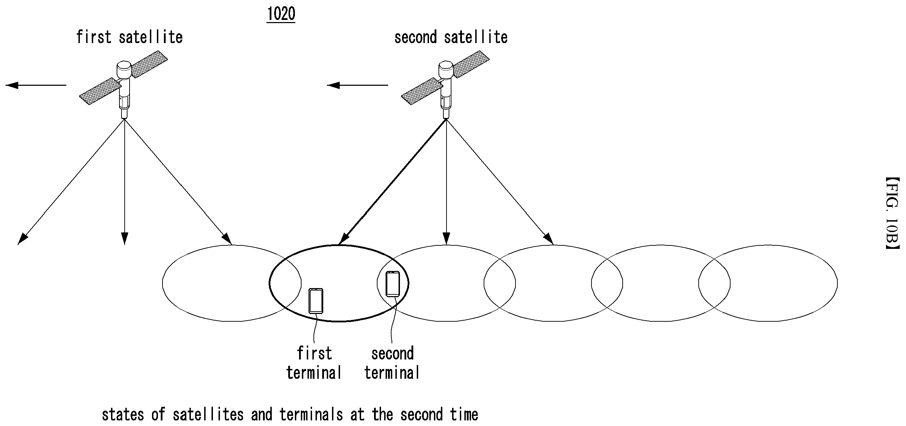

FIG. 10B is a conceptual diagram illustrating exemplary embodiments of a handover procedure.

As shown in FIG. 10A and FIG. 10B, in the EFB-based NTN (hereinafter referred to as 'EFB NTN'), each of the first satellite and the second satellite may move over time (e.g. from a first time to a second time), and may support earth fixed beams. The second time may be after the first time. The handover procedure may be classified into an intra-satellite (SAT) handover procedure and an inter-SAT handover procedure. The intra-SAT handover procedure and the inter-SAT handover procedure may each be a general handover procedure or a conditional handover (CHO) procedure. In the intra-SAT handover procedure, terminal(s) may perform a handover procedure between cells of the same satellite. That is, the intra-SAT handover procedure may be performed through beam switching in the same satellite. For example, in the intra-SAT handover procedure, all terminals connected to a first cell of the first satellite may be handed over to a second cell of the first satellite. In this case, all terminals may be handed over to the second cell at the same time or at similar times. The EFBs may be supported through beam steering in the same satellite.

In the inter-SAT handover procedure, terminal(s) may perform handover procedures between different satellites. In the inter-SAT handover procedure, all terminal connected to the first satellite (e.g. a specific cell of the first satellite) may be handed over to the second satellite (e.g. a specific cell of the second satellite). In this case, all terminals may be handed over to the second satellite at the same time or at similar times. A handover procedure performed in a duration from the first time to the second time may correspond to the inter-SAT handover procedure. The EFBs may be supported through a new cell of a new satellite (e.g. the second satellite).

Due to high altitudes in the NTN, an RSRP-based handover procedure may not be efficient. Therefore, a handover procedure suitable for NTN is needed. Even when a satellite moves in the EFB NTN, a cell area on the ground may be maintained. That is, the satellite may support a fixed cell area. The intra-SAT handover procedure and/or the inter-SAT handover procedure may be simultaneously performed for terminals (e.g. all terminals or some terminals) in the same cell. An efficient handover procedure considering the above-mentioned characteristics of the EFB NTN is needed.

Even when the satellites (the first satellite and the second satellite) move in the EFB environment, an existing beam coverage 860 on the ground may be maintained. The beam coverage may be referred to as a cell area on the ground. In the EFB environment, the satellites (the first satellite and the second satellite) may maintain the cell area in a fixed manner through beam steering or beam switching. As the existing satellite moves, the cell area may be served by a new satellite. When the cell area starts to be served by the new satellite, an elevation angle between the cell area and the new satellite may be the smallest. The elevation angle may increase as the satellite moves. After the elevation angle increases, the elevation angle may decrease again as the satellite moves further. In this case, a distance between the satellite and the cell may decrease or increase depending on the change of the elevation angle.

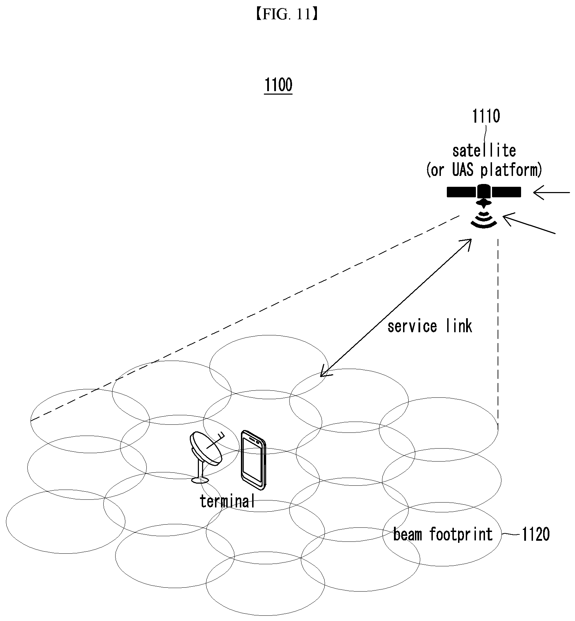

FIG. 11 is a conceptual diagram illustrating exemplary embodiments of beam footprints in an EFB environment.

As shown in FIG. 11, a satellite (or unmanned aerial vehicle (UAV) platform) 1110 may support multi-beams. The satellite may form a cell coverage through the multi-beams. The satellite may form beam footprints included in the cell coverage formed by the satellite. For example, a radius of the cell coverage formed by the satellite may be several tens of kilometers. Meanwhile, a moving speed of the satellite may be 7.56 km/s.

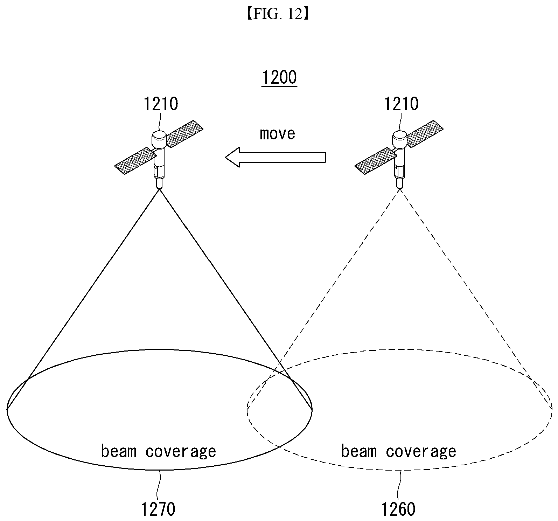

FIG. 12 is a conceptual diagram illustrating exemplary embodiments of EMBs.

As shown in FIG. 12, beams of the satellite may have EMB characteristics. In the EMB environment, when satellites 1210 and 1220 move, cell coverages 1260 and 1270 on the ground may change according to the movements of the satellites. Therefore, a satellite serving terminals in a specific region may continuously change. In this case, for terminals included in a beam coverage of a specific satellite, a data service time by the specific satellite may vary depending on a position at the beam coverage. In other words, a remaining cell time of a terminal may vary depending on a position of the terminal. The remaining cell time may refer to a remaining time during which the terminal is served in the corresponding cell, depending on the position of the terminal within the beam coverage. In other words, the remaining cell time may be a time during which communication service can be provided to the corresponding terminal in a cell where the terminal is located. When the remaining cell service time expires, the terminal may need to perform a procedure for (re) selecting another cell.

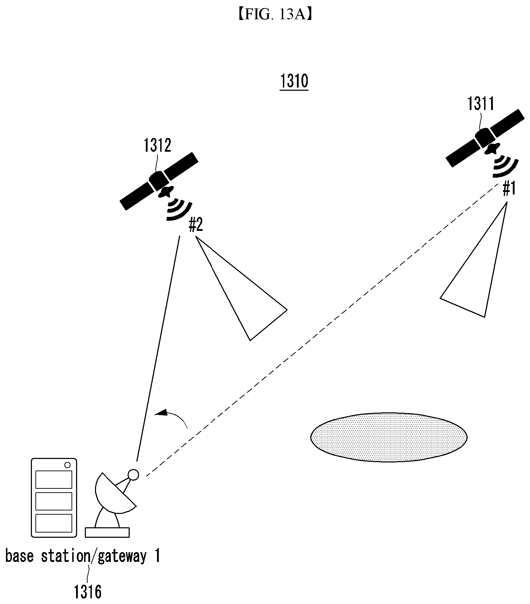

FIG. 13A is a conceptual diagram illustrating exemplary embodiments of a handover in a non-terrestrial network.

As shown in FIG. 13A, in an intra-SAT handover procedure, both a service link and/or a feeder link may be changed.

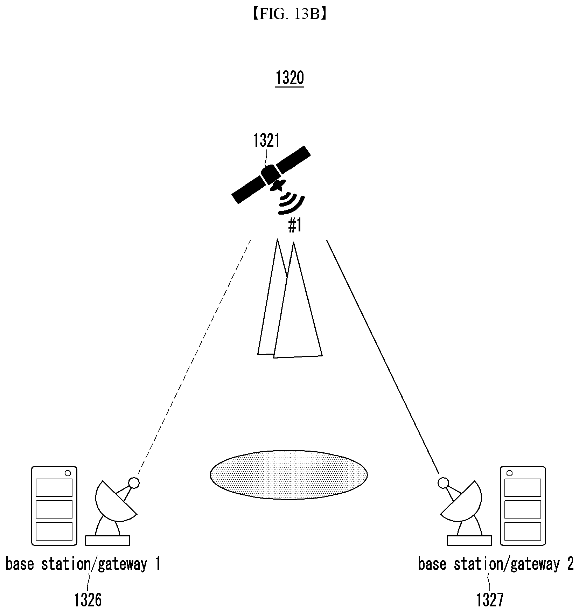

FIG. 13B is a conceptual diagram illustrating exemplary embodiments of a handover in a non-terrestrial network.

As shown in FIG. 13B, in an inter-SAT handover procedure, a service link may not be changed, and a feeder link may be changed.

Meanwhile, an NTN satellite system may operate in either an EFB environment or an EMB environment according to changes in beam footprints on the ground caused by satellite movement. Applying the same grouping method to both scenarios may not be efficient. That is, it may be difficult to obtain an effect of reducing handover signaling through grouping. Therefore, in a handover procedure of an NTN, a satellite may transmit a changed TA to a terminal when changing a base station.

Meanwhile, TA information for a terminal in the NTN may be configured as follows. The satellite may perform a RACH-less handover in the NTN. The satellite may configure TA information when performing the RACH-less handover procedure. When performing the RACH-less handover procedure in the NTN environment, timing difference information may be different for each terminal. The timing difference information may include a difference between a timing value of a source cell and a timing value of a target cell, based on timing information of the source cell and timing information of the target cell. To calculate the timing difference information, the satellite may acquire timing information for each cell. In the NTN, the timing information may be represented as in Equation 1 below.

[Equation 1]

$$ T_{TA} = \underbrace{\left(N_{TA} + N_{TA,offset} \times T_c\right)}_{closed-loop;\ Same\ with\ 5G\ NR} + \underbrace{\left(T_{TA,common} + T_{TA,UE-specific}\right)}_{Open-loop;\ New\ in\ NR\ NTN} $$

$T_{TA}$ may indicate timing information. $T_{TA,common}$ may indicate a delay between a reference point (RP) and the satellite. $T_{TA,common}$ may be referred to as a common TA. $T_{TA,UE-specific}$ may indicate a delay of a service link. $T_{TA,UE-specific}$ may indicate a TA value estimated by the terminal. $T_{TA,UE-specific}$ may be referred to as a UE-specific TA. The UE-specific TA may indicate a round trip delay (RTD) between the terminal and the satellite. In other words, $T_{TA,UE-specific}$ may indicate a delay between the terminal and the satellite. Meanwhile, the terminal may perform a closed-loop timing control procedure through a TA command message transmitted by the base station.

$N_{TA}$ may perform the same role as in the terrestrial network. For TA information in the NTN, $N_{TA,offset}$ may be additionally defined. $N_{TA,offset}$ may indicate a TA value commonly applied to terminals, and $T_c$ may be a time base unit constant mainly used in the NR physical layer and may indicate $4096 \times 480 \times 1000)^{-1}$ second.

The timing difference information may include a common TA difference value. The timing difference information may indicate a difference between different common TA values. For example, the difference between different common TA values may indicate a difference between a common TA value for the source cell and a common TA value for the target cell.

The common TA may be calculated based on an RP of each cell. When the terminal changes a cell through a handover procedure, the common TA value may change. Accordingly, the terminal may perform the handover procedure using the timing difference information for the common TA of the source cell and the common TA of the target cell.

The timing difference information for the common TA values may be transmitted to the terminal through a handover command message. The terminal may receive the handover command message transmitted by the base station. The handover command message may include the difference between common TA values. The terminal may calculate the UE-specific TA value by itself. The terminal may acquire timing information for the target cell based on the common TA difference value and the UE-specific TA value. In addition, the terminal may perform a RACH-less handover using the timing information for the target cell.

Meanwhile, when RPs of the source cell and the target cell are configured differently, the base station may transmit a timing difference caused by different RPs to the terminal.

The timing difference value for the common TAs and the timing difference value caused by different RPs may be transmitted to the terminal through two parameters. Alternatively, the timing difference value for the common TAs and the timing difference value caused by different RPs may be transmitted to the terminal through one parameter. For example, FL_TA_diff may be defined to include the common TA difference value and the timing difference value caused by different RPs. In addition, the satellite may redefine and use the common TA.

Meanwhile, in a feeder link switch situation, TA information may be updated as follows.

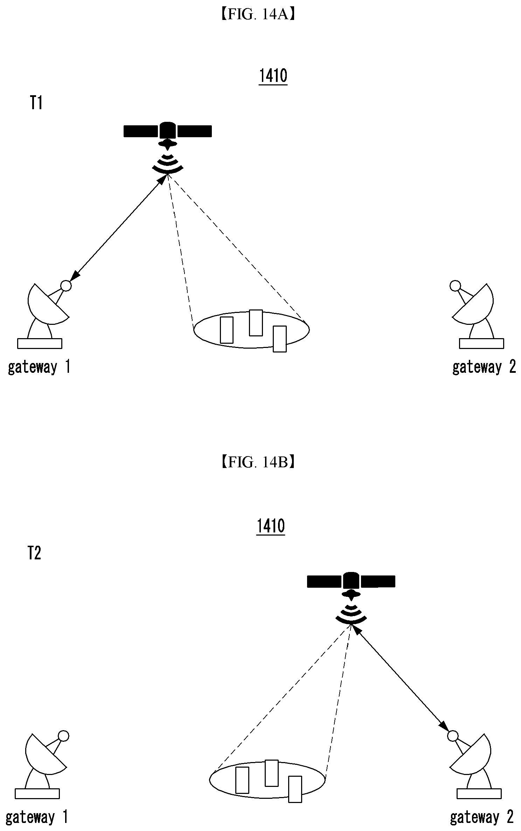

FIG. 14A is a conceptual diagram illustrating exemplary embodiments of a feeder link switch environment, and FIG. 14B is a conceptual diagram illustrating exemplary embodiments of a feeder link switch environment.

As shown in FIGS. 14A and FIG. 14B, in a situation where the base station performs a feeder link switch, the base station may update a TA value. T1 may indicate a time when the satellite is connected to a gateway 1. In addition, T1 may indicate a time immediately before performing a handover by the satellite. T2 may indicate a time when the satellite is connected to a gateway 2. T2 may indicate a time immediately after performing the handover by the satellite. The satellite may change the gateway through the handover procedure. In other words, the satellite may perform a feeder link switch.

The feeder link switch may refer to changing a gateway or a base station (gNB) connected to the satellite to another gateway or another base station. In other words, the feeder link switch may refer to changing a gateway or a base station without changing the satellite. When the satellite performs the feeder link switch procedure, a service link delay and/or a feeder link delay difference may occur. Here, the service link delay may be a common value.

The feeder link delay difference may be calculated based on a position of the satellite and a position of the gateway or the base station. In the handover procedure, the satellite may transmit information on the feeder link delay difference to all terminals in a cell supported by the satellite. A parameter indicating the feeder link delay difference may be defined as FL_TA_diff. The satellite may generate a handover command message including FL_TA_diff and may transmit the handover command message to the terminal.

In this case, FL_TA_diff may have a range of [-X, +X]. X may be a parameter configured in advance through an RRC message. For example, FL_TA_diff may be defined by a table having $2^N$ entries. FL_TA_diff may be transmitted to the terminal by using an index of the table having $2^N$ entries.

An RP of a feeder link formed through the gateway 1 may be located at the gateway 1. The RP may indicate a position (or time point) on the feeder link between the gateway (or a ground base station) and the satellite. An RP of a feeder link formed through the gateway 2 may be located at the gateway 2. A common TA value may correspond to a value between the base station and the RP. In this case, FL_TA_diff may be equal to a difference between the common TA values (a difference between the common TA value for the gateway 1 and the common TA value for the gateway 2).

The RP may be located in at least one of the base station for uplink synchronization, the satellite, the feeder link, or the service link. The position of the RP may not be limited. Information on the position of the RP may not be transmitted to the terminal. Therefore, the common TA may not be estimated by the terminal, and the common TA may be calculated by the network.

When the feeder links formed through the gateways have RPs at different positions, FL_TA_diff may be different from the difference between common TA values. In this case, FL_TA_diff may include the difference between common TA values and a timing difference value caused by the different positions of the RPs.

The satellite may generate an RRC message including the difference between common TAs and the timing difference value caused by the different positions of the RPs instead of a single parameter FL_TA_diff, and may transmit the RRC message to the terminal.

In the present disclosure, a timing group may be configured to improve a performance of a handover procedure in an NTN environment.

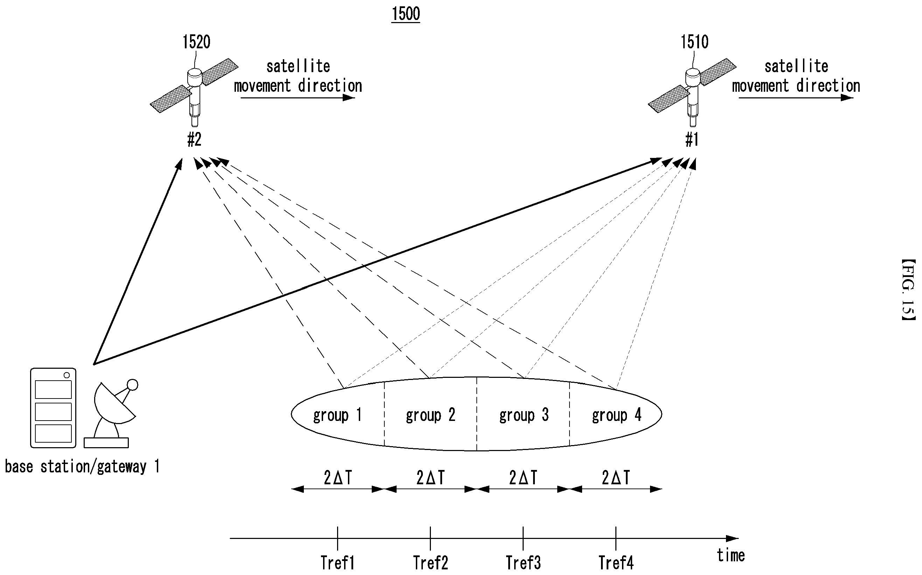

FIG. 15 is a conceptual diagram illustrating exemplary embodiments of timing group configuration.

As shown in FIG. 15, when an inter-SAT handover is requested from a terminal in the EFB environment, a feeder link and a service link may be changed. When performing a handover procedure in the EFB environment, the transmission path may differ before and after the handover. The satellite may perform the handover procedure by using four linearly configured timing groups (TGs).

A timing group may refer to a group of terminals having similar timing information. The timing group may be configured with terminals. The timing group may include terminals in which a difference between a reference value and a timing value is within ΔT.

The reference value may refer to a timing value for a center position of a configured distance defined by a base station associated with the satellite. For example, a reference value of a timing group 1 may indicate Tref1. Tref1 may indicate a timing value corresponding to a center position of the timing group 1. Tref1 may be represented as Tref1 = ΔT. Tref2 may indicate a reference value of a timing group 2. Tref2 may indicate a timing value corresponding to a center position of the timing group 2. Tref2 may be represented as Tref2 = Tref1 + 2ΔT. In addition, Tref3 may indicate a reference value of timing group 3. Tref3 may indicate a timing value corresponding to a center position of the timing group 3. Tref3 may be represented as Tref3 = Tref2 + 2ΔT. Tref4 may indicate a reference value of a timing group 4. Tref4 may indicate a timing value corresponding to a center position of the timing group 4. Tref4 may be represented as Tref4 = Tref3 + 2ΔT. ΔT may indicate a parameter configured in advance through an RRC message. ΔT may indicate a first TA range. The base station may configure the first TA range.

Accordingly, the base station may configure timing groups through timing group configuration information. The timing group configuration information may include a timing group index for a terminal. In other words, the base station may transmit a configured timing group index to each terminal. The base station may transmit the timing group index configured by the base station to each terminal through RRC signaling. The timing group index may include an identification number of a group configured for the terminal. The terminal may receive the timing group index transmitted by the base station. The terminal may identify the timing group of the terminal through the timing group index.

A timing group may be configured with terminals within a certain distance from a position corresponding to the reference value. The timing group may be configured in consideration of ΔT. In addition, the timing group may be configured in consideration of a certain distance from the position corresponding to the reference value. In other words, the timing group may be configured by using at least one of ΔT or the certain distance from the position corresponding to the reference value. A center position of the timing group may be acquired through position information of terminals. For example, each terminal may acquire its position information through a GNSS.

When terminals are concentrated in a narrow area, the satellite may configure a timing group by using a timing value for a center position of the area (i.e. narrow area) as a reference value. The satellite may configure the same timing group for terminals within a certain distance from the center position of the area. The satellite may configure the same timing group for terminals having a difference from the timing value for the center position of the area within a predefined timing value.

In other words, the base station may configure a timing group for terminals in which a difference between timing values (e.g. reference value - timing value of the terminal) is within ΔT. The reference value may indicate the timing value for the center position of the area or a value configured by the base station (e.g. Tref1, Tref2, Tref3, Tref4). The reference value may be a fixed value configured by the base station.

When terminals perform handover procedures, the terminals may receive changed timing information from the base station. The base station may select a method for transmitting the changed timing information to the terminals.

Terminals within each timing group may have the same common TA. When performing a handover procedure, the common TA value may change. Accordingly, the base station may transmit a difference of the common TA value to terminals within the timing group. The common TA value may be included in a handover command message. The base station may transmit the handover command message to the terminals within the timing group. The base station may transmit the handover command message to the terminals within the timing group through group-based signaling. In other words, the base station may transmit the handover command message to the terminals within the timing group through common signaling such as groupcast.

The common TA may be calculated based on an RP of each cell. Therefore, when a handover procedure of changing a cell is performed, the common TA may change. Accordingly, when terminals perform the handover procedures, the terminals may receive information on a difference between a common TA of a source cell and a common TA of a target cell. The base station may transmit information on the difference between common TAs to the terminals through a handover command message. The terminal may acquire timing information for the target cell based on the information on the difference between common TAs transmitted from the base station and a UE-specific TA value calculated by the terminal. In addition, the terminal may perform a RACH-less handover through the acquired timing information for the target cell.

When an RP changes, the base station may generate a handover command message including additional timing information and may transmit the handover command message to the terminals.

Meanwhile, the base station may configure a center point of a timing group. The center point of the timing group may indicate a geographically central position. In addition, the center point of the timing group may indicate a median value of timing values for terminals within the timing group. The base station may transmit a timing difference value based on the center point (e.g. reference value) to the terminals. The base station may generate a handover command message including the timing difference value based on the center point (e.g. reference value) and may transmit the handover command message to the terminals. For example, the base station may transmit, to the terminal, a difference value between a timing for a path from the center point (e.g. reference value) to the base station through the satellite 1 and a timing for a path from the center point (e.g. reference value) to the base station through the satellite 2.

Meanwhile, in the NTN environment, the base station may perform an open loop timing control procedure by using the common TA value and the UE-specific TA value. In the terrestrial network environment, the base station may perform a closed loop timing control procedure. A reason for introducing the open loop timing control procedure in the NTN environment may be to perform a timing control procedure in the NTN environment by using parameters $N_{TA}$ and $N_{TA,offset}$ used in the open loop timing control procedure. In this case, the parameters $N_{TA}$ and $N_{TA,offset}$ may have fixed lengths.

However, since a handover command message has no restriction on length change of parameters, the base station may transmit a timing difference value based on the center point of each timing group to the terminals.

In densely populated areas, terminals may be concentrated in a narrow area. Therefore, the base station may transmit a timing value based on the center point of the timing group to terminals within the timing group. The terminals may perform RACH-less handover procedures by using the timing value based on the center point of the timing group, which is transmitted by the base station.

For example, when configuring a timing group based on one-half of a signal CP length, in the case where an SCS is 15 kHz, since the CP length is 4.7 usec, the base station may configure terminals within 705 meters in consideration of a propagation delay corresponding to one-half of the CP length, that is, 2.35 usec, into the same timing group. In other words, the base station may configure terminals within a radius of approximately 705 meters as the same timing group. The terminals within 705 meters may perform an initial access with the same timing value.

The base station may transmit a timing difference value based on the center point of the timing group and information on the center point of the timing group to the terminal. The terminal may calculate an additional timing adjustment value by using position information of the terminal and ephemeris information of the satellite. The terminal may perform a RACH-less handover by using the timing adjustment value. When the terminal is not capable of GNSS functionality, the terminal may perform a RACH-less handover by using the timing adjustment value.

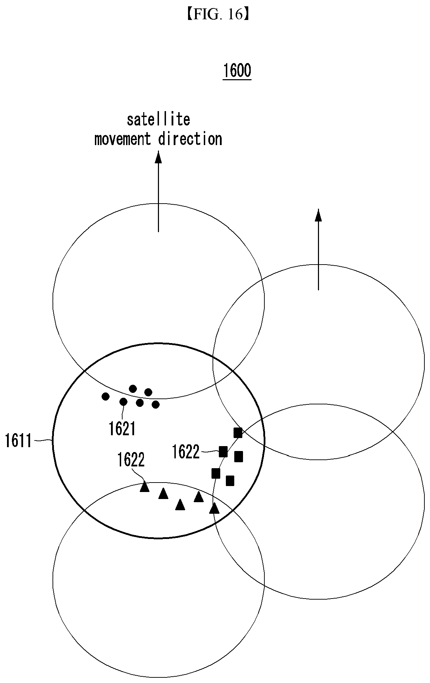

FIG. 16 is a conceptual diagram illustrating exemplary embodiments of a handover procedure in an EMB environment.

As shown in FIG. 16, in the EMB environment, remaining times of terminals included in a beam spot may be different from each other. The remaining time may refer to a time remaining until a handover request time of a terminal belonging to the beam spot. The remaining time may vary depending on a position of the terminal belonging to the beam spot. For example, a beam spot 1611 may include a plurality of terminals. The plurality of terminals may be illustrated as circles (e.g. 1621), squares (e.g. 1622), and triangles (e.g. 1623) in FIG. 16 for ease of explanation. In this case, the terminal 1621 may be able to receive services for the longest time compared to other terminals (i.e. the terminal 1622 and the terminal 1623) in consideration of a movement direction of a satellite. In other words, the terminal 1621 may perform a handover procedure at the latest time compared to other terminals (i.e. the terminal 1622 and the terminal 1623). Therefore, the terminal 1621 may have a larger remaining time compared to the other terminals (i.e. the terminal 1622 and the terminal 1623). The terminals belonging to the beam spot 1611 may perform the handover procedures in an order of smaller remaining time values.

Meanwhile, even when the terminals have the same remaining time depending on positions of the terminals, target satellites for the handover procedures may be different from each other. For example, even when the terminal 1621 and the terminal 1622 have the same remaining time, the terminal 1621 and the terminal 1622 may belong to different beam spots. Therefore, the handover procedures of the terminal 1621 and the terminal 1622 may be performed for different target satellites.

Therefore, the base station may configure a group so that the terminals in the group perform the handover procedures through common signaling. The base station may configure the terminals into a group by using the remaining time value and additional information. The group configuration may be performed at the base station. Information on the configured group may be transmitted to the terminals by transmitting an index of the group. In this case, when performing the handover procedure, the terminal may select a target satellite. When the terminal determines the target satellite, the base station may configure the group by using an ID of the target satellite. The base station may configure the group by using position information of the terminals and ephemeris information of the satellite.

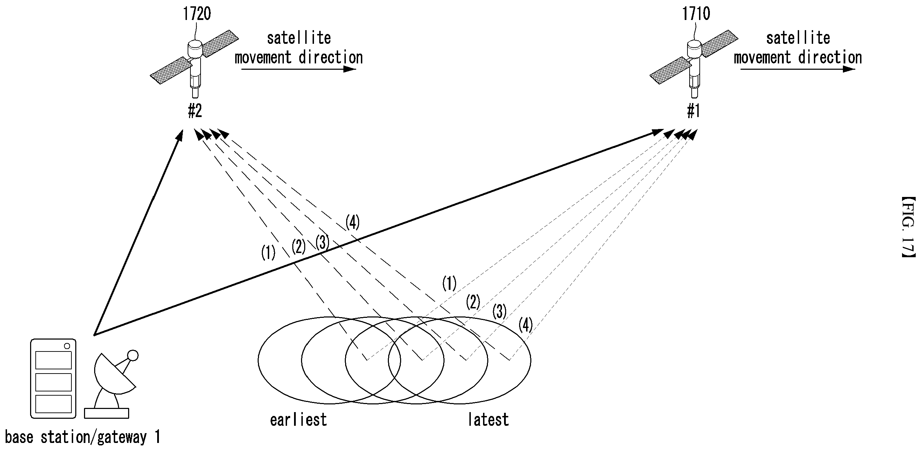

FIG. 17 is a conceptual diagram illustrating exemplary embodiments of a handover procedure in an EMB environment.

As shown in FIG. 17, in the EMB environment, handovers may sequentially occur for terminals according to a movement of a satellite. In other words, the base station may perform the handover procedures in consideration of an index of a timing group. A beam spot of the satellite may correspond to a timing group having a common TA. The base station may determine in advance a movement (speed, direction, altitude) of the satellite in the NTN. The base station may predict or calculate TA information of the next area by using TA information of the previous area.

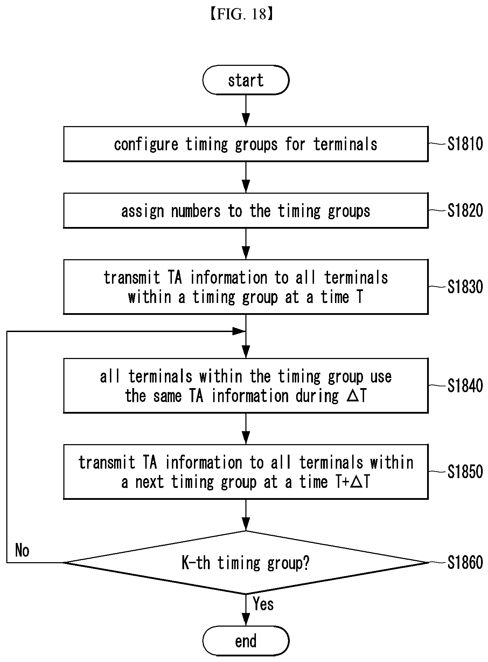

FIG. 18 is a conceptual diagram illustrating exemplary embodiments of a handover procedure in an EMB environment.

As shown in FIG. 18, in the EMB environment, handovers may occur collectively on a cell basis or a beam basis. However, in the EMB environment, handovers may occur continuously. FIG. 18 illustrates a method of updating timing information in handover procedures that continuously occur in the EMB environment.

In the EMB environment, the base station may configure a timing group for terminals (S1810). The terminals may refer to terminals located in the same beam spot. The base station may configure the terminals into the timing group by using remaining times. The remaining time may be configured as [reference value, reference value + $\triangle T$]. The base station may configure the terminals having the same target cell as the timing group. For example, when a reference value of a timing group 1 is 0, a reference value of a timing group 2 may be $\triangle T$, and a reference value of a timing group 3 may be $2\triangle T$.

Therefore, a remaining time of the timing group 1 may be [0, $\triangle$T]. A remaining time of the timing group 2 may be [$\triangle$T, 2$\triangle$T]. A remaining time of the timing group 3 may be [2$\triangle$T, 3$\triangle$T]. In other words, the timing group 2 may include terminals having a remaining time of [$\triangle$T, 2$\triangle$T].

The base station may assign numbers to the respective timing groups (S1820). The base station may assign the numbers to the timing groups in an order of smaller remaining time values.

The base station may transmit TA information to all terminals in a specific timing group at a specific time (S1830). The specific time may refer to a value configured by the base station. The specific time may be referred to as t. In this case, the TA information may refer to TA information for the specific time.

The terminals may use the same TA information during $\triangle$T (S1840).

The base station may transmit TA information to all terminals in a next timing group (S1850). The base station may transmit the TA information to all terminals in the next timing group after $\triangle$T elapses. In this case, the TA information may refer to TA information for a time obtained by adding $\triangle$T to the specific time.

The base station may determine whether the timing group of the terminals to which the TA information has been transmitted is the last timing group (S1860). When the timing group of the terminals is not the last timing group, the base station and the terminals may perform step S1840 and step S1850 again. When the timing group is the last timing group, the base station may terminate the procedure.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

**Claims**

1. A method of a user equipment (UE), comprising:

   receiving, from a first satellite, timing group configuration information for a timing group including the UE, the timing group being configured based on a beam spot supported by the first satellite;
   receiving, from the first satellite, a handover command message including timing information of the UE according to a timing group index included in the timing group configuration information;
   acquiring timing advance (TA) information using the timing information; and
   transmitting a handover complete message using the TA information.

2. The method according to claim 1, wherein the timing group configuration information includes the timing group index for identifying the timing group including UEs within a first TA range configured by the base station, when a difference between a timing value of the UE and a timing value for a center position of a configured distance defined by a base station associated with the first satellite falls within the first TA range.

3. The method according to claim 1, wherein the timing group configuration information includes the timing group index for identifying the timing group including UEs within a distance range configured by the base station from a center position of the beam spot, when the UE is within the distance range from the center position of the beam spot.

4. The method according to claim 1, wherein the timing group configuration information includes the timing group index for identifying the timing group including UEs having a cell remaining time within a time range configured by the first satellite, when a cell remaining time, which is a time during which communication services for the beam spot are provided to the UE, falls within the time range.

5. The method according to claim 1, wherein in the acquiring of the TA information using the timing information, the TA information is acquired by using a timing difference value corresponding to a difference between a first path including a path between the first satellite and a center position of the timing group and a path between the first satellite and a base station and a second path including a path between a second satellite and the center position of the timing group and a path between the second satellite and a base station.

6. The method according to claim 1, wherein the acquiring of the TA information using the timing information comprises:

   determining a UE-specific TA value; and
   acquiring the TA information by updating the TA information for the UE using the UE-specific TA value and at least one of a common TA value that is applied equally to all UEs of a source cell, a common TA value that is applied equally to all UEs of a target cell, or a timing difference value caused by a difference in reference point (RP) between the source cell and the target cell, which is included in the timing information.

7. The method according to claim 1, wherein the acquiring of the TA information using the timing information comprises:

   receiving, from the first satellite, at least one of position information of the UE, position information of the first satellite, or satellite ephemeris information;
   calculating a timing adjustment value for the UE using at least one of the position information of the UE, the position information of the first satellite, and the satellite ephemeris information; and
   acquiring the TA information using the timing adjustment value and the timing information.

8. A method of a base station, comprising:

   configuring timing group configuration information for a timing group including a user equipment (UE) based on a beam spot supported by a first satellite;
   transmitting, to the UE, a handover command message including timing information for the timing group to which the UE belongs, according to a timing group index included in the timing group configuration information; and
   receiving a handover complete message from the UE that performed a handover procedure based on the timing information for the timing group to which the UE belongs.

9. The method according to claim 8, wherein the configuring of the timing group configuration information comprises: in response to a difference between a timing value of the UE and a timing value for a center position of a configured distance defined by the base station communicating through the first satellite being equal to or less than a second TA value defined by the base station for the timing group, configuring the UE into the timing group.

10. The method according to claim 8, wherein the configuring of the timing group configuration information comprises: in response to a cell remaining time, which is a time during which communication services for the beam spot are provided to the UE, falling within a time range configured by the first satellite, configuring the UE into the timing group.

11. The method according to claim 8, wherein the timing information includes at least one of a common TA value that is applied equally to all UEs of a source cell, a common TA value that is applied equally to all UEs of a target cell, or a timing difference value caused by a difference in reference point (RP) between the source cell and the target cell.

12. A user equipment (UE) comprising at least one processor, wherein the at least one processor causes the UE to perform:

   receiving, from a first satellite, timing group configuration information for a timing group including the UE, the timing group being configured based on a beam spot supported by the first satellite;

receiving, from the first satellite, a handover command message including timing information of the UE according to a timing group index included in the timing group configuration information;

acquiring timing advance (TA) information using the timing information; and

transmitting a handover complete message using the TA information.

13. The UE according to claim 12, wherein the timing group configuration information includes the timing group index for identifying the timing group including UEs within a first TA range configured by the base station, when a difference between a timing value of the UE and a timing value for a center position of a configured distance defined by a base station associated with the first satellite falls within the first TA range.

14. The UE according to claim 12, wherein the timing group configuration information includes the timing group index for identifying the timing group including UEs within a distance range configured by the base station from a center position of the beam spot, when the UE is within the distance range from the center position of the beam spot.

15. The UE according to claim 12, wherein the timing group configuration information includes the timing group index for identifying the timing group including UEs having a cell remaining time within a time range configured by the first satellite, when a cell remaining time, which is a time during which communication services for the beam spot are provided to the UE, falls within the time range.

16. The UE according to claim 12, wherein in the acquiring of the TA information using the timing information, the TA information is acquired by using a timing difference value corresponding to a difference between a first path including a path between the first satellite and a center position of the timing group and a path between the first satellite and a base station and a second path including a path between a second satellite and the center position of the timing group and a path between the second satellite and a base station.

17. The UE according to claim 12, wherein in the acquiring of the TA information using the timing information, the at least one processor further causes the UE to perform:

determining a UE-specific TA value; and

acquiring the TA information by updating the TA information for the UE using the UE-specific TA value and at least one of a common TA value that is applied equally to all UEs of a source cell, a common TA value that is applied equally to all UEs of a target cell, or a timing difference value caused by a difference in reference point (RP) between the source cell and the target cell, which is included in the timing information.

18. The UE according to claim 12, wherein in the acquiring of the TA information using the timing information, the at least one processor further causes the UE to perform:

receiving, from the first satellite, at least one of position information of the UE, position information of the first satellite, or satellite ephemeris information;

calculating a timing adjustment value for the UE using at least one of the position information of the UE, the position information of the first satellite, and the satellite ephemeris information; and

acquiring the TA information using the timing adjustment value and the timing information.

【FIG. 1A】

feeder link

service link

beam foot print

data network

140

130

110

120

[FIG. 1B]

[FIG. 2A]

NG-RAN or 6G-RAN

UE

NR Uu or 6G Uu

satellite (base station)

NG over SRI or 6G over SRI

gateway

NG or 6G

core network

N6

data network

【FIG. 2C】

【FIG. 3】

300

320    310

memory

| ROM | RAM |

processor

input
interface
device    340

output
interface
device    350

370

storage
device    360

transceiver    330

【FIG. 4】

[FIG. 5A]

510

511 — channel coding and modulation

512 — S-to-P

513 — N IFFT

514 — P-to-S

515 — CP addition

516 — UC

data → signal

【FIG. 5B】

[FIG. 6A]

UE  satellite  gateway  core network (AMF)

NAS

base station

RRC | NGAP

PDCP | SCTP

RLC | IP

MAC | L2

PHY | L1

NAS

RRC

PDCP

RLC

MAC

PHY

NAS

NGAP

SCTP

IP

L2

L1

NR-Uu
or 6G-Uu

NR-Uu
or 6G-Uu

NG-C
or 6G-C

⊠ : RF processing and frequency switching

[FIG. 6B]

EP 4 633 257 A2

34

【FIG. 7A】

【FIG. 7B】

【FIG. 8】

800

satellite

feeder link

common TA
$T_{TA, Common}$

RP

UE-specific TA
$T_{TA, UE-Specific}$

service link

base station/gateway

beam/cell    terminal

【FIG. 9】

【FIG. 10A】

【FIG. 10B】

states of satellites and terminals at the second time

【FIG. 11】

1100

1110

satellite
(or UAS platform)

service link

terminal

beam footprint ~1120

【FIG. 12】

1200

1210

1210

move

beam coverage

beam coverage

1270

1260

【FIG. 13A】

1310

1311

1312

#1

#2

base station/gateway 1

1316

【FIG. 13B】

1320

1321

#1

base station/gateway 1

1326

base station/gateway 2

1327

【FIG. 14A】

1410

T1

gateway 1                                    gateway 2

【FIG. 14B】

1410

T2

gateway 1                                    gateway 2

【FIG. 15】

【FIG. 16】

1600

EP 4 633 257 A2

[FIG. 17]

【FIG. 18】

```
                    ┌──────────────┐
                    │    start     │
                    └──────┬───────┘
                           │
                           ▼
        ┌──────────────────────────────────────┐
        │  configure timing groups for terminals│──S1810
        └──────────────────┬───────────────────┘
                           │
                           ▼
        ┌──────────────────────────────────────┐
        │    assign numbers to the timing groups│──S1820
        └──────────────────┬───────────────────┘
                           │
                           ▼
        ┌──────────────────────────────────────┐
        │  transmit TA information to all terminals│──S1830
        │     within a timing group at a time T  │
        └──────────────────┬───────────────────┘
                           │
                           ▼
        ┌──────────────────────────────────────┐
        │  all terminals within the timing group use│──S1840
        │     the same TA information during ΔT  │
        └──────────────────┬───────────────────┘
                           │
                           ▼
        ┌──────────────────────────────────────┐
        │  transmit TA information to all terminals within│──S1850
        │    a next timing group at a time T+ΔT │
        └──────────────────┬───────────────────┘
                           │
                           ▼
No  ◄───────────◇ K-th timing group? ◇──S1860
                           │
                          Yes
                           ▼
                    ┌──────────────┐
                    │     end      │
                    └──────────────┘
```